# EUROPEAN PATENT APPLICATION

(11) **EP 2 332 726 A1**
(43) Date of publication of application: **15.06.2011**
(21) Application number: 09178330.8
(22) Date of filing: 08.12.2009
(51) Int. Cl.: B41F 23/04, F23G 5/46, F23G 7/06, B01D 53/34

(54) **Waste heat recovery system**

(71) Applicant: Maeda, Kazuhiko, Aichi, Aichi 452-0961 (JP)
(72) Inventor: Maeda, Kazuhiko, Aichi, Aichi 452-0961 (JP)
(74) Representative: Sajda, Wolf E.

(57) **Abstract**

Problem to be Solved:

A waste heat recovery system for effective utilization of heat energy discharged from a VOC treatment equipment, environmental friendliness, and energy conservation measures is provided.

Solution:

An exhaust gas type absorption chiller heater (6) produces cold water or hot water utilizing heat energy of exhaust gas discharged from a VOC treatment equipment (9) which executes burning and component decomposition at a high temperature of VOC emitted from a VOC emitting apparatus (1) in operation. Using the cold water or hot water to an air-conditioning equipment (27) of a factory or a cooler (2) of the VOC emitting apparatus (1) achieves environmental friendliness and energy saving. Moreover, since clean exhaust gas discharged from the VOC treatment equipment (9) is guided into the exhaust gas type absorption chiller heater (6), durability of the exhaust gas type absorption chiller heater (6) can be maintained.

## Description

### Technical Field

The present invention relates to a waste heat recovery system. More specifically, it relates to an air-conditioning system which utilizes waste heat discharged from a combustion-type VOC treatment equipment which processes volatile organic compound (hereinafter, it is referred to as "VOC") emitted from a gravure printer or an apparatus related to semiconductor manufacturing, and an air-conditioning system and a printer cooling system which utilizes waste heat discharged from a combustion-type deodorization equipment such as an offset printer.

### Background Art

A gravure printer or apparatus related to semiconductor manufacturing, and an offset printer etc. emit gas including VOC. Since VOC encourages global warming, it is subject to control of the Air Pollution Control Act, and its odor affects the neighbors. Consequently, gas including VOC is discharged to the ambient air after it has been decomposed at a high temperature by combustion by a combustion-type VOC treatment equipment or a combustion-type deodorization equipment.

A first known example of this kind of offset printer is a printer temperature adjusting apparatus which adjusts the temperatures of two liquids used in a printer. A first liquid is a dampening solution for a wet offset printer, and a second liquid is cooling water of an offset printer. The printer temperature adjusting apparatus includes a first liquid circuit for flowing the first liquid, a first heat exchanger and a first pump which are provided with the first liquid circuit, a second liquid circuit for flowing the second liquid, a second heat exchanger and a second pump which are provided with the second liquid circuit, and a cooling device having a refrigerant circuit for cooling the first and second liquid using the first and second heat exchangers.
With extension to the first heat exchanger, the refrigerant circuit exchanges heat energy with the first liquid circuit which extends to the first heat exchanger. Moreover, the first liquid circuit extends to the second heat exchanger in addition to the first heat exchanger, With extension to the second heat exchanger, the second liquid circuit exchanges heat energy with the first liquid circuit (Patent Document 1).

In this first known example, the temperature adjusting apparatus can be selectively used for a wet offset printer and a dry offset printer. This apparatus is able to heat or cool the dampening solution for a wet offset printer when it is used in dry offset printing.

Moreover, a second known example of this kind of printer is a dryer of a printer in which gas including VOC emitted from drying of ink on a printed material by a dryer body is discharged to ambient air after it has been deodorized through a combustion-type deodorization equipment. The dryer of the printer has heat storage means in a position through which hot temperature exhaust gas discharged from the deodorization equipment passes, and in dry operation heat from the exhaust gas discharged from the deodorization equipment is accumulated in the heat storage means. Moreover, during warm-up operation of the dry operation, the dryer of the printer dissipates heat accumulated in the heat storing means to the deodorization equipment (Patent Document 2).

In this second known example, redundant heat generated in the combustion-type deodorization equipment is accumulated in the heat storage means, and the heat accumulated in the heat storage means dissipate heat to the deodorization equipment during the warm-up operation of the dry operation, which achieves effective utilization of the redundant heat included in the exhaust gas after the deodorization. Accordingly, fuel used in the deodorization equipment can be reduced.

### Prior Art Documents

### Patent Documents

| | |
|---|---|
| Patent Document 1 | Japanese Patent Application Laid-Open (KOKAI) JP A-08-052 852 |
| Patent Document 2 | Japanese Patent Application Laid-Open (KOKAI) JP-A-11-291 454 |

### Summary of the Invention

### Problems to be Solved by the Invention

Incidentally, an offset printer, including ones of the dry type and wet type, has a cooling device for forcibly cooling a roller and a combustion-type deodorization equipment for deodorizing gas including VOC caused by ink drying of a printed material. To cool the roller, the cooling device in which cooling water at a required temperature is produced and circulated is used. On the other hand, actually, hot temperature exhaust gas deodorized by the deodorization equipment is directly discharged.
To deal with this, the first known example discloses a wet printer in which the dampening solution is cooled by a cooling device to be used. This cooling device is generally driven by electric energy. However, the first known example does not refer to processing of gas including VOC caused by ink drying at all.

The second known example discloses that gas including VOC caused by ink drying of a printed material is deodorized by the combustion-type deodorization equipment to be discharged. By configuring such that redundant heat generated by the combustion-type deodorization equipment is accumulated in the heat storing device and the heat accumulated in the heat storing device dissipates heat to the deodorization equipment during the warm-up operation of the dry operation, the redundant heat included in the high temperature exhaust gas after deodorization is effectively utilized for combustion. However, the second known example still discharges exhaust gas after combustion at a high temperature of 250 °C to 400 °C even through the deodorization can be executed. As a result, it is harmful to the environment.

Thus, in any of the known examples described above, there exist no countermeasures against heat or energy conservation measures which are unique to the printer. Accordingly, the present invention aims to provide a waste heat recovery system for effective utilization of heat energy discharged from the VOC treatment equipment, environmental friendliness, and energy conservation measures.

### Means for Solving the Problems

As a means to solve the problem, in accordance with a first aspect of the present invention, an exhaust gas type absorption chiller heater produces cold water or hot water utilizing heat energy of exhaust gas discharged from a VOC treatment equipment which executes combustion and component decomposition at a high temperature of VOC emitted from a VOC emitting apparatus in operation. Using the cold water or hot water to an air-conditioning equipment of a factory or a cooler of the VOC emitting apparatus achieves environmental friendliness and energy conservation measures.
Moreover, since exhaust gas discharged from the VOC treatment equipment is guided into the exhaust gas type absorption chiller heater, durability of the exhaust gas type absorption chiller heater can be maintained. Here, the exhaust gas discharged from the VOC treatment equipment is one including little harmful component by executing the component decomposition of VOC at a high temperature, not mere exhaust gas.

In accordance with a second aspect of the present invention, the VOC emitting apparatus is an offset printer, a gravure printer, or an apparatus related to semiconductor manufacturing. Moreover, in accordance with a third aspect of the present invention, the VOC treatment equipment is a combustion-type deodorization equipment, a combustion-type VOC treatment equipment, or a heat storage combustion type VOC treatment equipment.
The temperature of exhaust gas discharged from the combustion-type deodorization equipment device is generally 250°C to 400 °C, and the temperature of exhaust gas discharged from the combustion-type VOC treatment equipment or the heat storage combustion type VOC treatment equipment is generally 400 °C to 600 °C.
Accordingly, the exhaust gas type absorption chiller heater effectively utilizes heat energy emitted from the combustion-type deodorization equipment, the combustion-type VOC treatment equipment, or the heat storage combustion type VOC treatment equipment.

In accordance with a fourth aspect of the present invention, a cooler for cooling a roller of a printer executes cooling of the roller by cold water produced by the exhaust gas type absorption refrigerator. In accordance with a fifth aspect of the present invention, cold water produced by the exhaust gas type absorption refrigerator is stored in a cold water cushion tank, and the cold water circulates between the cold water cushion tank and the cooler. This allows the cold water provided to the cooler to maintain a substantially constant temperature.

In accordance with a sixth aspect of the present invention, an air-conditioning equipment of a factory executes air-conditioning of the factory by circulating cold water or hot water between the air-conditioning equipment and a cold or hot water cushion tank for storing cold water or hot water produced by the exhaust gas type absorption chiller heater. This allows the cold water or hot water provided to the air-conditioning equipment to maintain a substantially constant temperature.

In accordance with a seventh aspect of the present invention, exhaust gas emitted from the VOC treatment equipment is guided to the exhaust gas type absorption chiller heater by an exhaust gas introduction tube. In accordance with an eighth aspect of the present invention, the exhaust gas emitted from the VOC treatment equipment is suctioned in the exhaust gas introduction tube by a suction fan and guided into the exhaust gas type absorption chiller heater.

In accordance with a ninth aspect of the present invention, the suction fan is driven such that a pressure in a stack on a section, which is closer to its opening than a portion to which the exhaust gas introduction tube is connected, is maintained at 0 Pa or more compared to atmospheric pressure. This prevents an ambient air from flowing into an opening of the stack to be guided into the exhaust gas type absorption chiller heater through the exhaust gas introduction tube.

In accordance with a tenth aspect of the present invention, a fuel tubing for direct combustion which provides fuel for direct combustion is connected to the exhaust gas type absorption chiller heater. This allows the exhaust gas type absorption chiller heater to be operated in a state that the VOC treatment equipment discharges no exhaust gas when the VOC emitting apparatus is not operated, whereby the air-conditioning of the factory or cooling of the roller of the printer can be executed.

In accordance with an eleventh aspect of the present invention, the exhaust gas type absorption chiller heater is an exhaust gas type absorption refrigerator which evaporates a refrigerant in a low pressure container, produces cold water by heat of the evaporation, absorbs the evaporated refrigerant in absorbing liquid, heats the absorbing liquid which absorbs the refrigerant by a heat exchanger to evaporate the refrigerant, and reproduces the absorbing liquid, and the exhaust gas introduction tube guides the exhaust gas emitted from the VOC treatment equipment to the heat exchanger of the exhaust gas type absorption refrigerator. This allows the absorbing liquid which absorbs the refrigerant to be heated by heat energy of the exhaust gas for reproducing the absorbing liquid.

In accordance with a twelfth aspect of the present invention, a heat exchanger is provided with the stack and hot temperature water which circulates in a hot temperature water circulation pipe connected to the heat exchanger is guided into the absorption refrigerator. This allows effective utilization of heat energy emitted from the VOC treatment equipment to the cooler of the VOC emitting apparatus.

### Effects of the Invention

The waste heat recovery system according to the present invention executes, particularly in a unique configuration included in a printer or an apparatus related to semiconductor manufacturing, utilization of hot temperature exhaust gas discharged by the VOC treatment equipment as a heat source of the air-conditioner of the factory. This eliminates an adverse effect to the outer environment caused by the hot temperature exhaust gas which has been conventionally discharged to the outside after decomposition at a high temperature by the combustion-type VOC treatment equipment.
Further, using the hot temperature exhaust gas as a heat source of the air-conditioner of the factory makes an electric air-conditioner unnecessary, so that advantageous effects such as contribution to discharge regulation of global warming gas (chlorofluorocarbon), environmental friendliness, and energy saving can be achieved.

### Brief Description of the Drawings

- Fig. 1: is an explanation view schematically showing a configuration of a waste heat recovery system according to a first embodiment of the present invention.
- Fig. 2: is an explanation view schematically showing a configuration of a waste heat recovery system according to a second embodiment of the present invention.
- Fig. 3: is an explanation view schematically showing a configuration of a waste heat recovery system according to a third embodiment of the present invention.

### Best Mode for Carrying out the Invention

Embodiments of the present invention will be explained with reference to the drawings.

### First Embodiment

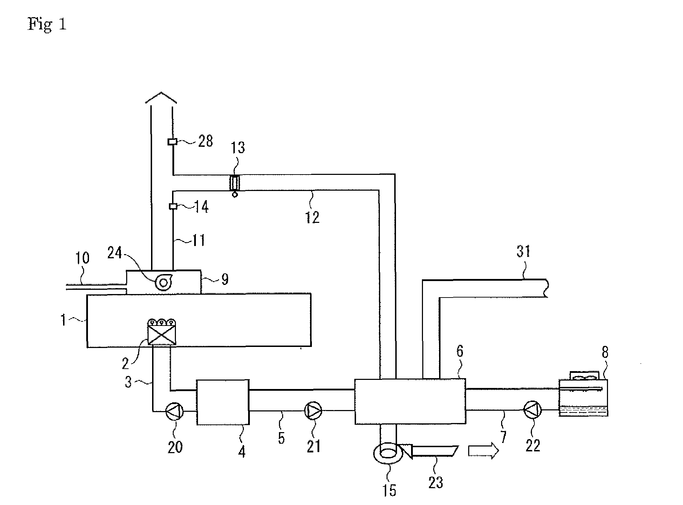

Fig. 1 shows a waste heat recovery system according to a first embodiment. In this embodiment, a VOC emitting apparatus is an offset printer. An offset printer 1 includes a cooler 2 for cooling a roller. A cold water cushion tank 4 is connected to this cooler 2 through a circulation pipe 3. An exhaust gas type absorption refrigerator 6 is connected to the cold water cushion tank 4 through a circulation pipe 5. A cooling tower 8 is connected to the exhaust gas type absorption refrigerator 6 through a circulation pipe 7. Additionally, in the figure, the reference numerals 20, 21, and 22 denote circulation pumps.

The offset printer 1 has a drying function for drying ink on a printed material. The offset printer 1 has a combustion-type deodorization equipment 9 as a VOC treatment equipment for deodorizing, by this drying function, VOC gas including odor caused by ink drying. Fuel like city gas and propane gas, or heavy oil for example, is guided into the deodorization equipment 9 through an introduction tube 10.
By burning this fuel in the deodorization equipment 9, odor of gas including VOC is deodorized by combustion. Exhaust gas discharged from the deodorization equipment 9 passes through a stack 11 by a fan 24 driven by an inverter motor, and is discharged to ambient air. The inverter motor that drives the fan 24 is controlled in proportion to a combustion temperature in the deodorization equipment 9.

A duct 12 as an exhaust gas introduction tube has one end connected to a middle section of the stack 11. The other end of the duct 12 is connected to the exhaust gas type absorption refrigerator 6.
The stack 11 has a temperature sensor 14 attached on a portion below a connecting portion of the duct 12, and a pressure sensor 28 attached on a portion above the duct 12.
Moreover, the duct 12 includes a motor damper 13 that can adjust the amount of exhaust gas flowing in the duct 12.

The exhaust gas type absorption refrigerator 6 includes a suction fan 15 that can adjust the amount of exhaust gas by inverter control for example, in order to introduce exhaust gas from the stack 11 and discharge it to the outside. This suction fan 15 is constituted of, for example, the inverter motor and a fan driven by this inverter motor.

Operation of the waste heat recovery system according to the present embodiment will be explained.
First, the offset printer 1 has a drying function for drying ink on a printed material, and after gas including VOC and odor caused by ink drying is deodorized by the combustion-type deodorization equipment 9, the gas is discharged to the outside. The temperature of exhaust gas becomes approximately 250 °C to 400 °C by combustion of the deodorization equipment 9. This waste heat recovery system does not discharge the hot temperature exhaust gas directly to the outside, but uses it as cooling energy for cooling the roller.

That is, the deodorization equipment 9 starts combustion when the offset printer 1 starts operation. When the temperature of exhaust gas detected by the temperature sensor 14 becomes 150 °C or more, a control device (not shown) opens the damper 13 and drives the suction fan 15. This allows the exhaust gas to be guided into the exhaust gas type absorption refrigerator 6 through the duct 12.
At this time, the control device drives the suction fan 15 such that the pressure detected by a pressure sensor 28 maintains 0 Pa or more compared to atmospheric pressure. This prevents ambient air from flowing into an opening of the stack 11 to be guided into the exhaust gas type absorption refrigerator 6 through the duct 12.

When the offset printer 1 is not operated, as exhaust gas is not generated, combustion gas such as city gas and propane gas or heavy fuel oil is provided in the exhaust gas type absorption refrigerator 6 through a fuel tubing for direct combustion 31 to execute direct combustion.
When the amount of exhaust gas is small, operation with a combination of exhaust gas and direct combustion can be executed.

The exhaust gas type absorption refrigerator 6 heats absorbing liquid such as lithium bromide which absorbs a refrigerant like water etc. by the heat exchanger using relatively high temperature exhaust gas to evaporate only the refrigerant. After the evaporated refrigerant has been returned into the liquid again, it is sent to an evaporator to be ejected (sprayed) in a low pressure container. By doing this, an object to be cooled, that is, water circulating in the circulation pipe 5 is cooled in the evaporator.
Next, the evaporated refrigerant is absorbed into the absorbing liquid in a vacuum case (absorber), and cooled by liquid circulating in the circulation pipe 7 from the cooling tower 8 to be liquefied. The exhaust gas type absorption refrigerator 6 produces cold water by sequentially repeating that the absorbing liquid which absorbs the refrigerant is heated again to evaporate only the refrigerant, and after this evaporated refrigerant has been returned into the liquid, it is sent to the evaporator to be cooled.

Combustion gas or heavy fuel oil is provided in the exhaust gas type absorption refrigerator 6 through the fuel tubing for direct combustion 31, so that even when the offset printer 1 is not operated, the absorption liquid can be heated. That is, the exhaust gas type absorption refrigerator 6 is of the type of operating with a combination of exhaust gas and direct combustion.

Cold water produced in the exhaust gas type absorption refrigerator 6 is sent to the cold water cushion tank 4. Circulation of the cold water between the cold water cushion tank 4 and the cooler 2 of the offset printer 1 executes cooling of the roller. In this case, the cold water circulating between the cold water cushion tank 4 and the cooler 2 is mixed with relatively cold water sent from the exhaust gas type absorption refrigerator 6 in the cold water cushion tank 4.
Consequently, even when water heated by the roller returns to the cold water cushion tank 4, since low temperature water produced in the exhaust gas type absorption refrigerator 6 is always provided to the cold water cushion tank 4, the cold water cushion tank 4 can maintain cold water at a substantially constant temperature. Thus, cold water is sent from the cold water cushion tank 4 to the cooler 2 in a state that a substantially constant temperature is maintained.

Moreover, exhaust gas guided into the exhaust gas type absorption refrigerator 6 by the suction fan 15 is discharged to the outside from an exhaust tube 23 at a low temperature of approximately 170 °C to 200 °C which is half or less of an initial temperature, which provides no harm to the environment.

### Second Embodiment

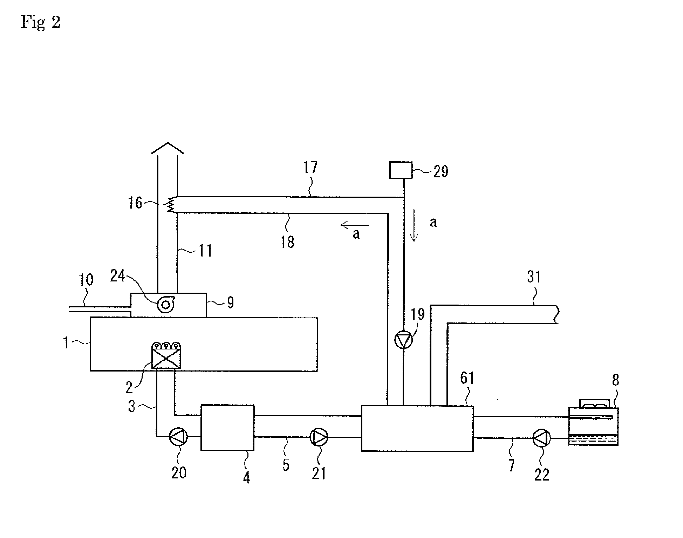

Fig. 2 shows a waste heat recovery system according to a second embodiment. The same configurations and components as those of the waste heat recovery system according to the first embodiment are assigned the same reference numerals, and their explanations are omitted.

The difference between the first embodiment and the second embodiment is that a heat exchanger 16 is provided in the middle section of the stack 11, and hot temperature water circulation pipes 17 and 18 are connected to this heat exchanger 16. These hot temperature water circulation pipes 17 and 18 are connected to an absorption refrigerator 61. A circulation pump 19 is provided in the middle section of the hot temperature water circulation pipe 17, and hot temperature water circulates between the absorption refrigerator 61 and the heat exchanger 16. An expansion tank 29 which absorbs an increment in volume of the hot temperature water is provided with the hot temperature water circulation pipe 17.

Operation of the waste heat recovery system according to the present second embodiment will be explained.
In this waste heat recovery system, the heat exchanger 16 is provided in an interior of the stack 11, and heating of this heat exchanger 16 by exhaust gas executes the heating of water as a heating medium circulating in the hot temperature water circulation pipes 17 and 18. The heat exchanger 16 is preferably used as one with improved heat collection efficiency by providing pipes, having multiple fins for example, in a meandering state to have a large contact area with the exhaust gas. By driving the circulation pump 19, the water as a heating medium circulates in the direction of arrows a.

The water heated by the heat exchanger 16 becomes hot temperature water of around 90 °C, and this heated hot temperature water is guided in the absorption refrigerator 61 through the circulation pipe 17.
The cold water produced in the absorption refrigerator 61 circulates between the absorption refrigerator 61 and the cold water cushion tank 4, and circulation of the cold water between the cold water cushion tank 4 and the cooler 2 executes cooling of the roller.

Additionally, hot temperature water guided into the absorption refrigerator 61 is around 90 °C, and the hot temperature water in the circulation pipe 18 on the return side becomes approximately 80 °C. Moreover, the temperature of exhaust gas discharged from the stack 11 is lowered to approximately 150°C by the heat exchanger 16, and the exhaust gas is discharged to the outside.

Also in this embodiment, in the offset printer 1 having a drying function for the printed material and a cooling device for the roller, exhaust gas caused by drying is deodorized by the combustion-type deodorization equipment 9, and the printer does not discharge the hot temperature exhaust gas discharged by the combustion-type deodorization equipment 9 directly to the outside, but uses it as cooling energy for cooling the roller. This allows not only energy saving by replacement with an electric refrigerator but also environmentally friendliness since the hot temperature exhaust gas is cooled to a low temperature and discharged to the outside.

### Third Embodiment

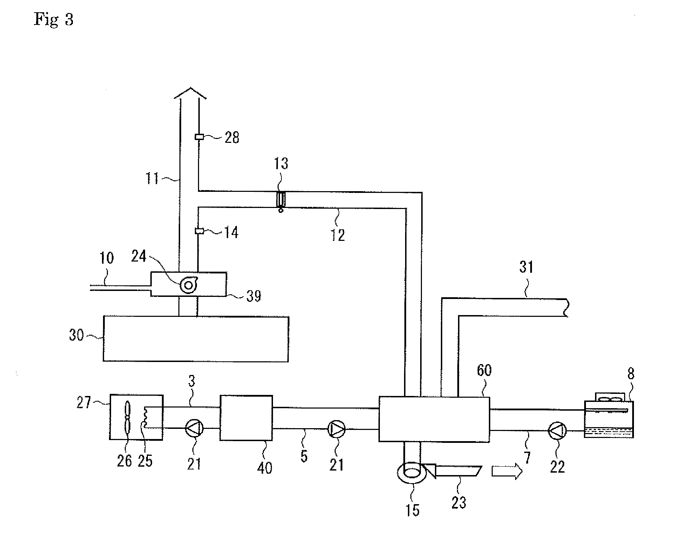

Fig. 3 shows a waste heat recovery system according to a third embodiment. The same configurations and components as those of the waste heat recovery system according to the first and second embodiments are assigned the same reference numerals, and their explanations are omitted. In this embodiment, a VOC emitting apparatus is a gravure printer 30. Gas including VOC emitted from a drying function for drying ink of a printed material of the gravure printer 30 is burned by a combustion-type or heat storage combustion type VOC treatment equipment 39 to be decomposed at a high temperature. The exhaust gas discharged from the VOC treatment equipment 39 passes through the stack 11 to be discharged to the outside.

The duct 12 as an exhaust gas introduction tube has one end connected to a middle section of the stack 11. The other end of the duct 12 is connected to an exhaust gas type absorption chiller heater 60. The exhaust gas type absorption chiller heater 60 includes the suction fan 15 which is constituted of, for example, a fan driven by a motor in order to introduce exhaust gas from the stack 11 and discharge it to the outside.

Operation of the waste heat recovery system according to the present embodiment will be explained.
The gravure printer 30 has a drying function for drying ink on a printed material, and gas including VOC and odor caused by ink drying is decomposed at a high temperature by the VOC treatment equipment 39. The temperature of exhaust gas discharged from the VOC treatment equipment 39 becomes approximately 400 °C to 600 °C. The waste heat recovery system does not discharge the hot temperature exhaust gas directly to the outside, but uses it as energy for an air-conditioning equipment of a factory.

That is, the VOC treatment equipment 39 starts combustion when the gravure printer 30 starts operation. When the temperature of exhaust gas detected by the temperature sensor 14 becomes 150 °C or more, a control device (not shown) opens the damper 13 and drives the suction fan 15. This allows the exhaust gas to be guided into the exhaust gas type absorption chiller heater 60 through the duct 12.
At this time, the control device drives the suction fan 15 such that the pressure detected by a pressure sensor 28 is 0 Pa or more compared to atmospheric pressure. This prevents ambient air from flowing into an opening of the stack 11 to be guided into the exhaust gas type absorption chiller heater 60 through the duct 12.

When the gravure printer 30 is not operated, as exhaust gas is not generated from the VOC treatment equipment 39, combustion gas such as city gas and propane gas or heavy fuel oil is provided in the exhaust gas type absorption chiller heater 60 through the fuel tubing for direct combustion 31 to execute direct combustion.
When the amount of exhaust gas is small, operation with a combination of exhaust gas and direct combustion can be executed.

The exhaust gas type absorption chiller heater 60 operates in the same manner as the absorption refrigerator 6 in the first embodiment. The circulation pipe 5 is connected to a cold or hot water cushion tank 40. Accordingly, water in the cold or hot water cushion tank 40 is heated and cooled, respectively.

An air-conditioning unit 25 includes a fan 27 and a cold or hot water coil 26. The cold or hot water coil 26 is connected to the cold or hot water cushion tank 40 through the circulation pipe 3, Cold or hot water produced in the exhaust gas type absorption chiller heater 60 circulates between the exhaust gas type absorption chiller heater 60 and the cold or hot water cushion tank 40, and the cold or hot water in the cold or hot water cushion tank 40 circulates between the cold or hot water cushion tank 40 and the cold or hot water coil 26 of the air-conditioning unit 25. The air-conditioning unit 25 provides, by the fan 27, air which is heated or cooled by the cold or hot water coil 26 to the factory in which the gravure printer 30 is installed.

Exhaust gas guided into the exhaust gas type absorption chiller heater 60 by the suction fan 15 loses heat, and is discharged to the outside from the exhaust tube 23 at a low temperature of approximately 170 °C to 250 °C which is half or less of an initial temperature, which provides no harm to the environment.

### Other Embodiment

In the third embodiment described above, explanation is made on the gravure printer 30 as a VOC emitting apparatus. On the other hand, a VOC emitting apparatus in the present invention may be an apparatus related to semiconductor manufacturing. VOC emitted from the apparatus related to semiconductor manufacturing is burned by the combustion-type or heat storage combustion type VOC treatment equipment to be decomposed at a high temperature. The waste heat recovery system uses the hot temperature exhaust gas as energy for an air-conditioning equipment installed in a semiconductor manufacturing factory.

### Industrial Applicability

The waste heat recovery system utilizing waste heat according to the present invention has a drying function for a printed material included in a printer to deodorize, by combustion, exhaust gas including VOC and odor caused by drying using the combustion-type deodorization equipment. However, this exhaust gas has a high temperature and affects adversely the outer environment. Then, this hot temperature exhaust gas is not directly discharged to the outside, but used as a heat source of the cooling device for cooling the roller required for the printer. Alternatively, it is used as a heat source of the air-conditioner of the factory in which the printer is installed,
Moreover, VOC emitted from the apparatus related to semiconductor manufacturing is decomposed at a high temperature by the combustion-type or heat storage combustion type VOC treatment equipment to be discharged to the outside. However, this exhaust gas has a high temperature and affects adversely the outer environment. Then, this hot temperature exhaust gas is not discharged to the outside, but used as a heat source for an air-conditioning equipment of a factory in which a semiconductor manufacturing device is installed.
This makes an electric air-conditioner unnecessary, so that contribution to discharge regulation of global warming gas (chlorofluorocarbon), environmental friendliness, and energy saving can be achieved. Accordingly, this system can be widely utilized for various waste heat recovery systems.

Moreover, the exhaust gas can be positively used to drive the cooling device. Further, in summertime, redundant cooling capacity can be used for cooling in a room, while in wintertime, the hot temperature exhaust gas can be used for heating a room. In this way, the exhaust gas can be widely used considering the entire environment.

### Description of Reference Signs

- 1: = offset printer (VOC emitting apparatus)
- 2: = cooler
- 3: = circulation pipe
- 4: =cold water cushion tank
- 5: = circulation pipe
- 6: = exhaust gas type absorption refrigerator
- 7: =circulation pipe
- 8: = cooling tower
- 9: = combustion-type deodorization equipment (VOC treatment equipment),
- 10: = introduction tube
- 11: = stack
- 12: = duct (exhaust gas introduction tube)
- 13: = motor damper
- 14: = temperature sensor
- 15: = suction fan
- 16: = heat exchanger
- 17: =hot temperature water circulation pipe
- 18: = hot temperature water circulation pipe
- 19: = circulation pump
- 20: = circulation pump
- 21: = circulation pump
- 22: = circulation pump
- 23: = exhaust tube
- 24: = fan
- 25: =air conditioning unit 26 = water coil
- 27: = fan
- 28: = pressure sensor
- 29: = expansion tank
- 30: = gravure printer
- 31: =tubing for direct combustion
- 39: = VOC treatment equipment
- 40: =cushion tank
- 60: = exhaust gas type absorption chiller heater
- 61: = absorption refrigerator

## Claims

1. A waste heat recovery system comprising:
- a VOC emitting apparatus (1, 30) for emitting VOC when it is in operation;
- a VOC treatment equipment (9, 39) which executes component decomposition at a high temperature by burning VOC emitted from the VOC emitting apparatus (1, 30); and
- an exhaust gas type absorption chiller heater (6, 60, 61) which utilizes heat energy of exhaust gas discharged from the VOC treatment equipment (9, 39) to produce cold water or hot water,
- wherein the cold water or hot water produced by the exhaust gas type absorption chiller heater (6, 60, 61) is used for an air-conditioning equipment (27) of a factory or a cooler (2) of the VOC emitting apparatus (1, 30).

2. The system according to Claim 1,
wherein the VOC emitting apparatus (1, 30) is an offset printer (1), a gravure printer (30), or an apparatus related to semiconductor manufacturing.

3. The system according to Claim 1 or 2,
wherein the VOC treatment equipment (9, 39) is a combustion-type deodorization equipment (9), a combustion-type VOC treatment equipment (39), or a heat storage combustion type VOC treatment equipment (39).

4. The system according to any of Claims 1 to 3,
wherein the VOC emitting apparatus (1) is a printer (1) including a cooler (2) for cooling a roller, and the cooler (2) executes cooling of the roller by cold water produced by an exhaust gas type absorption refrigerator (6).

5. The system according to Claim 4,
further comprising a cold water cushion tank (4) for storing cold water produced by the exhaust gas type absorption refrigerator (6), wherein the cooler (2) executes cooling of the roller by circulating cold water between the cooler (2) and the cold water cushion tank (4).

6. The system according to any of Claims 1 to 5,
further comprising a cold or hot water cushion tank (40) for storing cold water or hot water produced by the exhaust gas type absorption chiller heater (60), wherein the air-conditioning equipment (27) of a factory executes air-conditioning of the factory by circulating cold water or hot water between the air-conditioning equipment and the cold or hot water cushion tank (40).

7. The system according to any one of Claims 1 to 6,
wherein an exhaust gas introduction tube (12) for guiding exhaust gas emitted from the VOC treatment equipment (39) to the exhaust gas type absorption chiller heater (60) is connected to a stack (11) which discharges the exhaust gas emitted from the VOC treatment equipment (39) to ambient air.

8. The system according to Claim 7,
wherein the exhaust gas emitted from the VOC treatment equipment (39) is suctioned in the exhaust gas introduction tube (12) by a suction fan (15) and guided into the exhaust gas type absorption chiller heater (60).

9. The system according to Claim 8,
wherein the suction fan (15) is driven such that pressure in the stack (11) in a section, which is closer to its opening than a portion to which the exhaust gas introduction tube (12) is connected, maintains 0 Pa or more compared to atmospheric pressure.

10. The system according to any one of Claims 1 to 9,
wherein a fuel tubing for direct combustion (31) which provides fuel for direct combustion is connected to the exhaust gas type absorption chiller heater (60).

11. The system according to any one of Claims 7 to 10,
wherein the exhaust gas type absorption chiller heater (60) is an exhaust gas type absorption refrigerator (60) which evaporates a refrigerant in a low pressure container, produces cold water by heat of the evaporation, absorbs the evaporated refrigerant in absorbing liquid, heats the absorbing liquid which absorbs the refrigerant by a heat exchanger to evaporate the refrigerant, and reproduces the absorbing liquid, and
wherein the exhaust gas introduction tube (12) guides the exhaust gas emitted from the VOC treatment equipment (39) to the heat exchanger of the exhaust gas type absorption refrigerator (60).

12. The system according to any one of Claims 1 to 11,
wherein a heat exchanger (16) is provided with a stack (11) through which the exhaust gas emitted from the VOC treatment equipment (9) passes, and wherein hot temperature water which circulates in a hot temperature water circulation pipe (17, 18) connected to the heat exchanger (16) is guided into the absorption refrigerator (61).
